# EUROPEAN PATENT APPLICATION

(11) **EP 4 775 815 A2**
(43) Date of publication of application: **15.07.2026**
(21) Application number: 26151119.0
(22) Date of filing: 09.01.2026
(51) Int. Cl.: F02C 6/20, F02C 7/06, F02C 7/12, F02C 7/18, F02K 3/06

(54) **AIRCRAFT PROPULSION SYSTEM WITH MULTIPLE COOLING CIRCUITS**

(30) Priority: 09.01.2025 US 202519014878
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An aircraft apparatus includes a turbine engine (24), a first electric machine (100A), a first controller (102A), a first fluid circuit (134A), a second electric machine (100B), a second controller (102B) and a second fluid circuit (134B). The turbine engine includes a first rotating structure (60A) and a second rotating structure (60B). The first electric machine is operatively coupled to the first rotating structure. The first controller is configured to control operation of the first electric machine. The first fluid circuit is configured to circulate a first liquid and service the first electric machine and the first controller. The second electric machine is operatively coupled to the second rotating structure. The second controller is configured to control operation of the second electric machine. The second fluid circuit is configured to circulate a second liquid and service the second electric machine and the second controller. The second fluid circuit is fluidly discrete from the first fluid circuit.

## Description

### BACKGROUND OF THE DISCLOSURE

### 1. Technical Field

This disclosure relates generally to an aircraft powerplant and, more particularly, to cooling various components of the aircraft powerplant.

### 2. Background Information

An aircraft powerplant includes various components which may utilize heat dissipation during aircraft powerplant operation. Various heat dissipation systems and methods are known in the art. While these known heat dissipation systems and methods have various benefits, there is still room in the art for improvement.

### SUMMARY OF THE DISCLOSURE

According to an aspect of the present disclosure, an apparatus is provided for an aircraft. This apparatus includes a turbine engine, a first electric machine, a first controller, a first fluid circuit, a second electric machine, a second controller and a second fluid circuit. The turbine engine includes a first rotating structure and a second rotating structure operable to rotate independent of the first rotating structure. The first rotating structure includes a first bladed rotor. The second rotating structure includes a second bladed rotor. The first electric machine is operatively coupled to the first rotating structure. The first controller is configured to control operation of the first electric machine. The first fluid circuit is configured to circulate a first liquid and service the first electric machine and the first controller. The second electric machine is operatively coupled to the second rotating structure. The second controller is configured to control operation of the second electric machine. The second fluid circuit is configured to circulate a second liquid and service the second electric machine and the second controller. The second fluid circuit is fluidly discrete from the first fluid circuit.

According to another aspect of the present disclosure, another apparatus is provided for an aircraft. This apparatus includes a turbine engine, a first electric machine, a first controller, a first fluid circuit, a second electric machine, a second controller and a second fluid circuit. The turbine engine includes a first rotating structure and a second rotating structure operable to rotate independent of the first rotating structure. The first rotating structure includes a first bladed rotor. The second rotating structure includes a second bladed rotor. The first electric machine is operatively coupled to the first rotating structure. The first controller is electrically coupled to the first electric machine. The first fluid circuit is configured to service the first electric machine and the first controller. The first fluid circuit includes a first circuit pump. The second electric machine is operatively coupled to the second rotating structure. The second controller is electrically coupled to the second electric machine. The second fluid circuit is configured to service the second electric machine and the second controller. The second fluid circuit includes a second circuit pump configured to operate independent of the first circuit pump.

According to still another aspect of the present disclosure, another apparatus is provided for an aircraft that includes an aircraft propulsion system. The aircraft propulsion system includes a plurality of electric machines, a plurality of controllers and a plurality of fluid circuits. Each of the controllers is electrically coupled to and is configured to control operation of a respective one of the electric machines. Each of the fluid circuits is configured to circulate a respective liquid. Each of the fluid circuits is configured to cool and/or lubricate a respective one of the electric machines and a respective one of the controllers. Each of the fluid circuits is fluidly independent of each other fluid circuit of the fluid circuits.

The following optional features may be applied to any of the above aspects

The aircraft propulsion system may include a ducted propulsor rotor.

The aircraft propulsion system may include an open propulsor rotor.

The second circuit pump may be located remote from the first circuit pump.

The first circuit pump may be configured to pump a first liquid through a first circuit path of the first fluid circuit. The second circuit pump may be configured to pump a second liquid through a second circuit path of the second fluid circuit. The second liquid may be different than the first liquid.

The apparatus may also include a third electric machine, a third controller and a third fluid circuit. The third controller may be configured to control operation of the third electric machine. The third fluid circuit may be configured to circulate a third liquid and service the third electric machine and the third controller. The third fluid circuit may be fluidly discrete from the first fluid circuit and the second fluid circuit.

The apparatus may also include an engine fluid circuit configured to circulate a third liquid and service one or more components of the turbine engine. The engine fluid circuit may be fluidly discrete from the first fluid circuit and the second fluid circuit.

The first fluid circuit may be configured to cool the first electric machine and the first controller using the first liquid. In addition or alternatively, the second fluid circuit may be configured to cool the second electric machine and the second controller using the second liquid.

The first fluid circuit may be configured to lubricate the first electric machine using the first liquid. In addition or alternatively, the second fluid circuit may be configured to lubricate the second electric machine using the second liquid.

The apparatus may also include an electrical system. The first electric machine may be electrically coupled to the electrical system through the first controller. The second electric machine may be electrically coupled to the electrical system through the second controller.

The first fluid circuit may include a first circuit heat exchanger, a first circuit reservoir, a first circuit pump and a first circuit path. The first circuit heat exchanger, the first circuit reservoir and the first circuit pump may be fluidly coupled inline along the first circuit path.

The first controller and the first electric machine may be arranged serially along the first circuit path.

The first controller may be arranged upstream of the first electric machine along the first circuit path.

The first electric machine and the first controller may be arranged along the first circuit path. The first fluid circuit may also include a first circuit bypass and a first circuit valve. The first circuit bypass may be configured to bypass the first controller along the first circuit path. The first circuit valve may be configured to regulate a flow of the first liquid through the first circuit bypass.

The first electric machine and the first controller may be arranged along the first circuit path. The first fluid circuit may also include a first circuit bypass configured to bypass a controller section of the first circuit path in thermal communication with the first controller. During a first mode, the first fluid circuit may be configured to flow more of the first liquid through the controller section of the first circuit path than through the first circuit bypass. During a second mode, the first fluid circuit may be configured to flow more of the first liquid through the first circuit bypass than through the controller section of the first circuit path.

The turbine engine may also include an engine case. The first electric machine, the first controller and the first circuit reservoir may be arranged with the engine case.

The engine case may house the first bladed rotor and the second bladed rotor.

The turbine engine may also include a propulsor rotor. The engine case may house the propulsor rotor.

The turbine engine may also include an engine case. The first circuit reservoir and one of the first electric machine or the first controller may be arranged with the engine case. The other one of the first electric machine or the first controller may be arranged remote from the engine case.

The turbine engine may also include a compressor section, a combustor section, a turbine section and a flowpath extending through the compressor section, the combustor section and the turbine section. The first bladed rotor may be configured as or otherwise include a first turbine rotor in the turbine section. The second bladed rotor may be configured as or otherwise include a second turbine rotor in the turbine section. The first turbine rotor may be arranged between the combustor section and the second turbine rotor along the flowpath.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at an electric machine system.
FIG. 3 is a schematic illustration of a portion of the aircraft propulsion system at a working fluid system with multiple fluid circuits.
FIGS. 4 and 5 are schematic illustrations of a portion of the aircraft propulsion system with electric machine system components serviced by various fluid circuit arrangements.
FIG. 6 is a schematic illustration of a portion of the aircraft propulsion system with a remotely located heat exchanger.
FIG. 7 is a schematic illustration of a portion of the aircraft propulsion system with a remotely located reservoir.
FIG. 8 is a schematic illustration of a portion of the aircraft propulsion system with a remotely located electric machine system member.
FIG. 9 is a schematic illustration of a portion of the aircraft propulsion system with reservoirs arranged with a common structure.
FIG. 10 is a schematic illustration of a portion of the aircraft propulsion system with reservoirs arranged with different structures.
FIG. 11 is a schematic illustration of a portion of the aircraft propulsion system with electric machine system members arranged with a common structure.
FIG. 12 is a schematic illustration of a portion of the aircraft propulsion system with electric machine system members arranged with different structures.
FIG. 13 is a schematic illustration of a portion of the aircraft propulsion system with another fluid circuit.
FIG. 14 is a partial side schematic illustration of the aircraft propulsion system with an open propulsor rotor.

### DETAILED DESCRIPTION

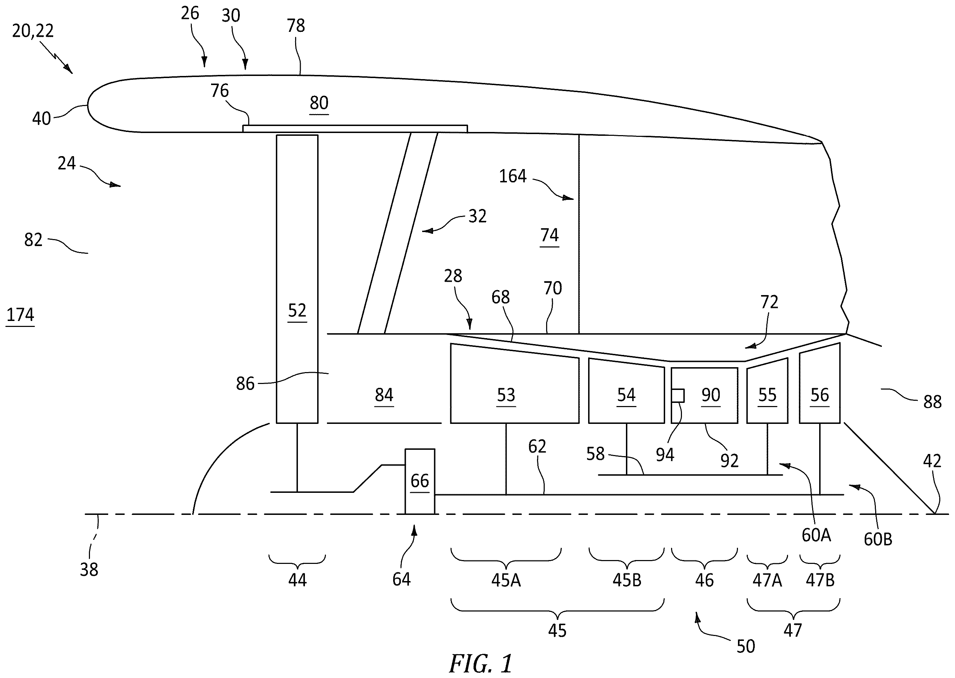

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted or open rotor propulsion system. Moreover, the aircraft powerplant 20 is not limited to propulsion system applications. The aircraft powerplant 20, for example, may alternatively (or also) be configured as an electrical power system for the aircraft; e.g., an auxiliary power unit (APU).

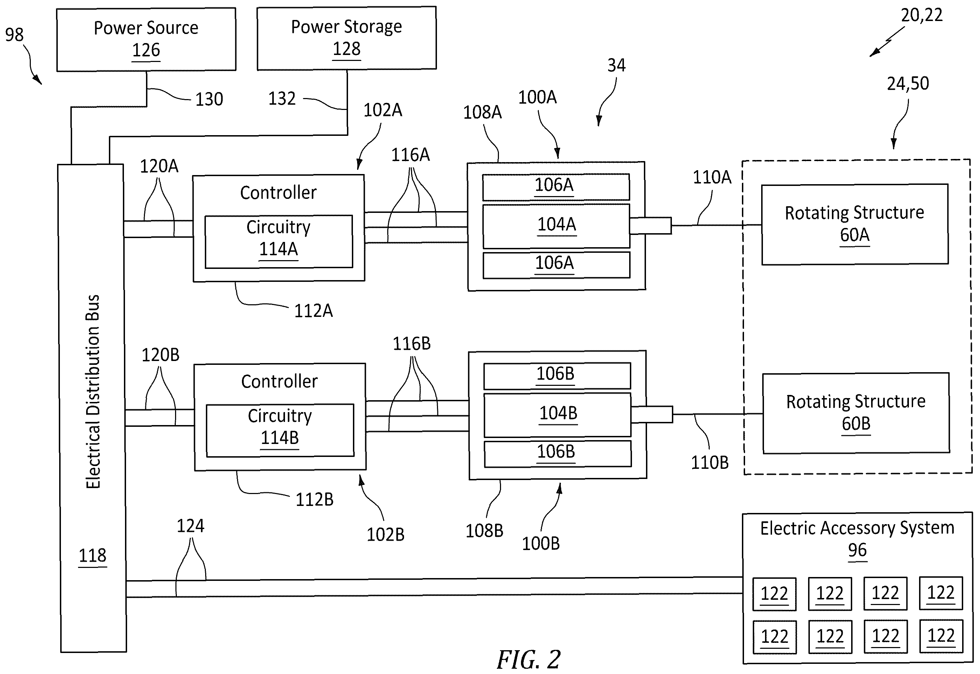

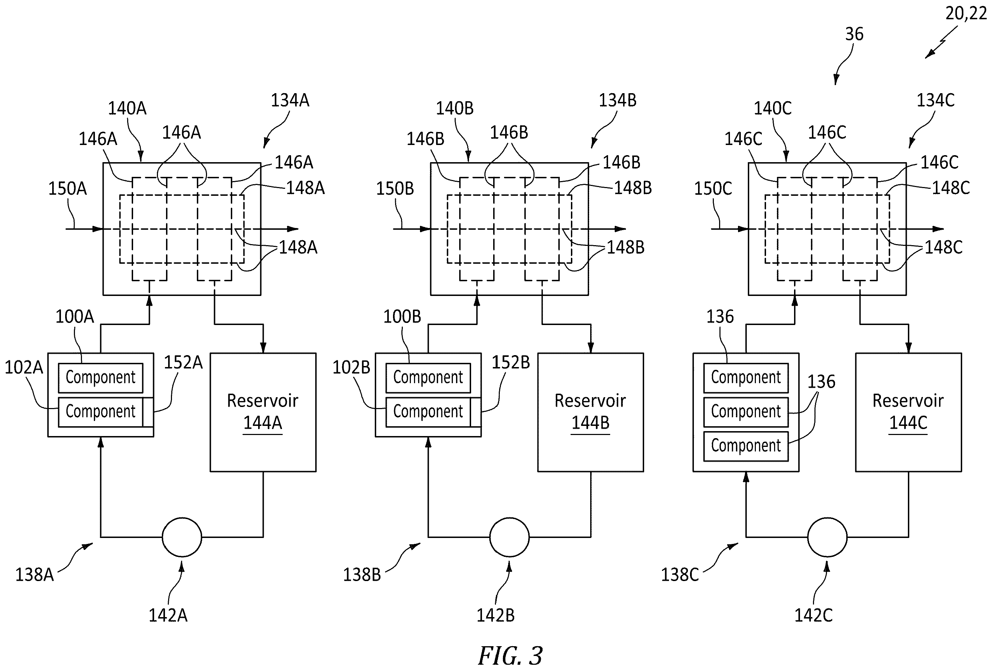

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 between an axial forward, upstream end 40 of the aircraft propulsion system 22 and an axial aft, downstream end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. Here, at least (or only) the LPC section 45A, the HPC section 45B, the combustor section 46, the HPT section 47A and the LPT section 47B collectively form a core 50 of the turbine engine 24.

The engine sections 44-47B may be arranged sequentially along the propulsion system axis 38 within the propulsion system housing 26. The propulsor section 44 includes a bladed propulsor rotor 52; e.g., a fan rotor. The LPC section 45A includes a bladed low pressure compressor (LPC) rotor 53. The HPC section 45B includes a bladed high pressure compressor (HPC) rotor 54. The HPT section 47A includes a bladed high pressure turbine (HPT) rotor 55. The LPT section 47B includes a bladed low pressure turbine (LPT) rotor 56.

The HPC rotor 54 is coupled to and rotatable with the HPT rotor 55. The HPC rotor 54 of FIG. 1, for example, is connected to the HPT rotor 55 through a high speed shaft 58. At least (or only) the HPC rotor 54, the HPT rotor 55 and the high speed shaft 58 collectively form a high speed rotating structure 60A; e.g., a high speed spool of the engine core 50. This high speed rotating structure 60A of FIG. 1 and its members 54, 55 and 58 are rotatable about the propulsion system axis 38. However, it is contemplated the high speed rotating structure 60A may alternatively be rotatable about another axis radially and/or angularly offset from the rotational axis of the propulsor rotor 52 and/or the centerline axis of the turbine engine 24.

The LPC rotor 53 is coupled to and rotatable with the LPT rotor 56. The LPC rotor 53 of FIG. 1, for example, is connected to the LPT rotor 56 through a low speed shaft 62. At least (or only) the LPC rotor 53, the LPT rotor 56 and the low speed shaft 62 collectively form a low speed rotating structure 60B; e.g., a low speed spool of the engine core 50. This low speed rotating structure 60B is further coupled to the propulsor rotor 52 through a drivetrain 64. The drivetrain 64 may be configured as a geared drivetrain, where a geartrain 66 (e.g., a transmission, a speed change device, an epicyclic geartrain, etc.) is disposed between and operatively couples the propulsor rotor 52 to the low speed rotating structure 60B and its LPT rotor 56. With this arrangement, the propulsor rotor 52 may rotate at a different (e.g., slower) rotational speed than the low speed rotating structure 60B and its LPT rotor 56. Alternatively, the drivetrain 64 may be configured as a direct drive drivetrain, where the geartrain 66 is omitted. With such an arrangement, the propulsor rotor 52 rotates at a common (the same) rotational speed as the low speed rotating structure 60B and its LPT rotor 56. The low speed rotating structure 60B of FIG. 1 and its members 53, 56 and 62 as well as the propulsor rotor 52 are rotatable about the propulsion system axis 38. However, it is contemplated the low speed rotating structure 60B may alternatively be rotatable about another axis radially and/or angularly offset from the rotational axis of the propulsor rotor 52 and/or the centerline axis of the turbine engine 24.

The inner housing structure 28 of FIG. 1 includes an inner case 68 (e.g., a core case) for the turbine engine 24, an inner nacelle structure 70 (sometimes referred to as an inner fixed structure (IFS)) and an internal inner housing compartment 72. The inner case 68 is disposed radially outboard of, extends axially along and may circumscribe one or more or all of the engine sections 45A-47B and the engine rotors 53-56. The inner case 68 may thereby house and provide a support structure for the respective engine sections 45A-47B and the engine rotors 53-56. The inner nacelle structure 70 is configured to provide an aerodynamic cover over the engine core 50 and its inner case 68. The inner housing compartment 72 of FIG. 1 is formed by and is disposed radially between the inner case 68 and an inner barrel of the inner nacelle structure 70. The inner housing structure 28 and its inner nacelle structure 70 may also form a radial inner peripheral boundary of a (e.g., annular) bypass flowpath 74 within the aircraft propulsion system 22.

The outer housing structure 30 of FIG. 1 includes an outer case 76 (e.g., a fan case) for the turbine engine 24, an outer nacelle structure 78 and an internal outer housing compartment 80. The outer case 76 is disposed radially outboard of, extends axially along and may circumscribe the propulsor section 44 and its propulsor rotor 52. The outer case 76 may thereby house and provide a containment structure for the propulsor section 44 and its propulsor rotor 52. The outer nacelle structure 78 is configured to provide an aerodynamic cover over the outer case 76. The outer housing compartment 80 of FIG. 1 is at least partially formed by and disposed radially between the outer case 76 and an outer portion (e.g., fan cowls) of the outer nacelle structure 78. The outer housing structure 30 and its outer nacelle structure 78 may also form a radial outer peripheral boundary of the bypass flowpath 74.

During operation, ambient air from outside of the aircraft enters the aircraft propulsion system 22 and its turbine engine 24 through an airflow inlet 82. This air is directed across the propulsor section 44 and into a (e.g., annular) core flowpath 84 and the bypass flowpath 74. The core flowpath 84 of FIG. 1 extends sequentially through the LPC section 45A, the HPC section 45B, the combustor section 46, the HPT section 47A and the LPT section 47B from an airflow inlet 86 into the core flowpath 84 to a combustion products exhaust 88 out from the core flowpath 84 and the engine core 50. The air entering the core flowpath 84 may be referred to as "core air". The bypass flowpath 74 extends through a bypass duct, which bypass flowpath 74 and bypass duct bypass (e.g., are disposed radially outboard of and extend along) the engine core 50 and the inner housing structure 28. The air within the bypass flowpath 74 may be referred to as "bypass air".

The core air is compressed by the LPC rotor 53 and the HPC rotor 54 and is directed into a combustion chamber 90 (e.g., annular combustion chamber) of a combustor 92 (e.g., annular combustor) in the combustor section 46. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 55 and the LPT rotor 56 about the propulsion system axis 38. The rotation of the HPT rotor 55 and the LPT rotor 56 respectively drive rotation of the HPC rotor 54 and the LPC rotor 53 about the propulsion system axis 38 and, thus, compression of the air received from the core inlet 86. The rotation of the LPT rotor 56 also drives rotation of the propulsor rotor 52 about the propulsion system axis 38 through the drivetrain 64 and its geartrain 66. The rotation of the propulsor rotor 52 propels the bypass air through and out of the bypass flowpath 74. The propulsion of the bypass air may account for a majority of thrust generated by the turbine engine 24 of FIG. 1. Briefly, within the bypass flowpath 74, the guide vane structure 32 conditions (e.g., straightens out, de-swirls, etc.) the flow of bypass air propelled by the propulsor rotor 52 to enhance the forward thrust.

While the turbine engine 24 is described above with a particular two rotating structure arrangement, the present disclosure is not limited thereto. For example, the LPC rotor 53 may be omitted to configure the LPT rotor 56 as a power turbine (PT) rotor for the propulsor rotor 52. In another example, the turbine engine 24 may also include another rotating structure; e.g., an intermediate speed spool for the engine core 50.

Referring to FIG. 2, the electric machine system 34 is electrically coupled to an optional electric accessory system 96 and an electrical system 98 for the aircraft and its aircraft propulsion system 22. The electric machine system 34 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104 is rotatable about a rotational axis of the machine rotor 104, which rotational axis may also be an axial centerline of the electric machine 100. The machine stator 106 of FIG. 2 is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

Each electric machine 100A, 100B may be operatively coupled to a respective one of the engine rotating structures 60A, 60B (generally referred to as "60"). Each machine rotor 104A, 104B of FIG. 2, for example, is mechanically coupled to and rotatable with the respective engine rotating structure 60A, 60B through a drivetrain 110A, 110B (generally referred to as "110"). This drivetrain 110 may be configured as or otherwise include a shaft, a tower shaft assembly, an accessory gearbox, an angle gearbox, and/or the like. For ease of description, each machine rotor 104 of FIG. 2 is described below as being coupled to and rotatable with a unique one of the engine rotating structures 60 of the turbine engine 24. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 100 are described above as being coupled to the engine rotating structures 60, it is contemplated the machine rotor 104 of one or more of the electric machines 100 may alternatively be operatively coupled to another rotating device through the drivetrain 110 such as, but not limited to, a pump rotor, an auxiliary compressor rotor, an actuator rotor, or the like.

Each electric machine 100 of FIG. 2 may be configurable as an electric motor and/or an electric generator; e.g., an electric motor-generator. For example, during a motor mode of operation, a respective one of the electric machines 100 may operate as the electric motor to convert electricity received from the aircraft electrical system 98 into mechanical power. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure 60 through the respective drivetrain 110. This mechanical power may be provided to boost power or completely power the rotation of the respective engine rotating structure 60. By contrast, during a generator mode of operation, the respective electric machine 100 may operate as the electric generator to convert mechanical power received from the respective engine rotating structure 60 into electricity. Rotation of the machine rotor 104, for example, may be rotationally driven by rotation of the respective engine rotating structure 60 through the respective drivetrain 110. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. In another example, one, some or all of the electric machines 100 may alternatively each be configured as a dedicated electric motor; e.g., without the electric generator functionality.

Each EM controller 102A, 102B includes a controller housing 112A, 112B (generally referred to as "112") and internal controller circuitry 114A, 114B (generally referred to as "114"). The controller housing 112 may be configured as an enclosed case (e.g., a closed or sealed container) for the respective controller circuitry 114. The controller circuitry 114 is disposed within an interior of the controller housing 112; e.g., an internal chamber or other volume(s) within and enclosed by the controller housing 112. The controller circuitry 114 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 102A, 102B is electrically coupled to a respective one of the electric machines 100A, 100B through one or more electric cables 116A, 116B (generally referred to as "116"); e.g., high voltage electric cables, power feeder cables, etc. More particularly, the controller circuitry 114 of each EM controller 102 is electrically coupled to the respective electric machine 100 and its machine stator 106 through the respective electric cables 116. Similarly, each EM controller 102A, 102B is electrically coupled to an electrical distribution bus 118 of the aircraft electrical system 98 through one or more electric cables 120A, 120B (generally referred to as "120"); e.g., high voltage electric cables, power feeder cables, etc. More particularly, the controller circuitry 114 of each EM controller 102 is electrically coupled to the aircraft electrical system 98 and its electrical distribution bus 118 through the respective electric cables 120.

Each EM controller 102 and its controller circuitry 114 are configured to control operation of a respective one of the electric machines 100. For example, when operating as the electric motor, the respective EM controller 102 and its controller circuitry 114 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 114 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The electric accessory system 96 includes one or more electric devices 122. The electric devices 122 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 122 of FIG. 2 may be configured as part of one or more sub-systems for the aircraft propulsion system 22 and its turbine engine 24. Examples of these sub-systems include, but are not limited to: a fuel system for delivering the fuel to the fuel injectors (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 122 is electrically coupled to the electrical distribution bus 118 of the aircraft electrical system 98 through one or more electric cables 124 (collectively schematically shown); e.g., high voltage electric cables, low voltage electric cables, power feeder cables, etc. Each electric device 122 may thereby receive a current of electricity from the aircraft electrical system 98 to power operation thereof.

The aircraft electrical system 98 includes the electrical distribution bus 118. This aircraft electrical system 98 may also include a power source 126 and/or a power storage 128. The electrical distribution bus 118 is electrically coupled to each of the electric machines 100 through their respective EM controllers 102. The electrical distribution bus 118 is electrically coupled to each of the electric devices 122. The electrical distribution bus 118 is also electrically coupled to the power source 126 and the power storage 128, schematically shown via 130 and 132 respectively. With this arrangement, the electrical distribution bus 118 provides an intermediate connection between the various electrical aircraft propulsion system members 100A (via 102A), 100B (via 102B), 122, 126 and/or 128. The power source 126 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 118 for storage. The power storage 128 is also configured to provide the stored electricity to the electrical distribution bus 118. The power storage 128, for example, may be configured as or otherwise include one or more electricity storage devices; e.g., batteries, super capacitors, etc. With the foregoing aircraft electrical system arrangement, the electrical current provided to one, some or all of the electric devices 122 may be received, through the electrical distribution bus 118, from any one, some or all of the electrical aircraft propulsion system members 100A, 100B, 126 and/or 128. It is also contemplated the electrical current provided to one of the electric machines 100 may be received from another one of the electric machines 100 through the aircraft electrical system 98 and its electrical distribution bus 118.

Referring to FIG. 3, the working fluid system 36 may be configured as a heat exchange and/or lubrication system for various components of the aircraft propulsion system 22. The working fluid system 36 of FIG. 3, for example, includes a plurality of discrete fluid circuits 134A-C (generally referred to as "134"); e.g., fluidly decoupled circuits, fluidly independent circuits, etc. Each of these fluid circuits 134 may be configured to service (e.g., cool and/or lubricate) a different set of propulsion system components. For example, the electric machine (EM) system first fluid circuit 134A is configured to cool and/or lubricate at least (or only) the first electric machine 100A and the first EM controller 102A using a first circuit working fluid. The electric machine (EM) system second fluid circuit 134B is configured to cool and/or lubricate at least (or only) the second electric machine 100B and the second EM controller 102B using a second circuit working fluid. The engine fluid circuit 134C is configured to cool and/or lubricate one or more components 136 of the turbine engine 24 and its engine core 50 (see FIG. 1) using an engine circuit working fluid. Examples of the engine components 136 which may be serviced by the engine fluid circuit 134C may include, but are not limited to, engine bearing(s), the geartrain 66 (see FIG. 1), component(s) of the drivetrain(s) 110 (see FIG. 2), lubricated seal member(s) and engine heat exchanger(s).

By dividing the working fluid system 36 into the discrete fluid circuits 134A, 134B and 134C, each fluid circuit 134 may be individually tuned based on cooling and/or lubrication requirements for one or more of its serviced propulsion system components. For example, the EM system first fluid circuit 134A may be tuned for specific heat loads generated by one or more of the electric machine system members 100A and 102A and/or a working temperature range for one or more of the electric machine system members 100A and 102A. The EM system second fluid circuit 134B may be tuned for specific heat loads generated by one or more of the electric machine system members 100B and 102B and/or a working temperature range for one or more of the electric machine system members 100B and 102B. The engine fluid circuit 134C may be tuned for specific heat loads generated by one or more of the engine components 136 and/or a working temperature range for one or more of the engine components 136. To this end, the working temperature range for the electric machine system members 100A and 102A and the working temperature range for the electric machine system members 100B and 102B may be different (e.g., lower or higher) than the working temperature range for the engine components 136. The working temperature range for the electric machine system members 100A and/or 102A may also be different (e.g., lower or higher) than the working temperature range for the electric machine system members 100B and/or 102B. Alternatively, the working temperature range for the electric machine system members 100A and/or 102A may also be the same as the working temperature range for the electric machine system members 100B and/or 102B. Moreover, while the first circuit working fluid, the second circuit working fluid and the engine circuit working fluid may have a common composition (e.g., the same chemical constituent(s)), some or all of these working fluids may alternatively have different compositions (e.g., chemical constituent(s)) to further tune one or more heat exchange and/or lubrication parameters for the respective fluid circuit 134. Similarly, while the fluid circuits 134 may share one or more common operational parameters (e.g., flow rate, pressure, etc.), some or all of these fluid circuits 134 may alternatively have different operational parameters further tuned for the respective set of propulsion system components.

In addition to the foregoing, by providing each set of propulsion system components with a dedicated fluid circuit 134, potential debris, flow blockages, etc. associated with one of the fluid circuits 134 will not affect operation of the other fluid circuit(s) 134. With this in mind, in an unlikely event a component (e.g., a pump, a valve, etc.) of the EM system first fluid circuit 134A (or alternatively the EM system second fluid circuit 134B) fails or is otherwise operationally derated (e.g., reduced in operational capacity, efficiency, etc.), operation of the electric machine system members 100A and 102A serviced by that EM system first fluid circuit 134A may also be operationally derated or turned-off; e.g., depowered, disconnected, disengaged, etc. However, since the electric machine system members 100B and 102B are serviced by the discrete EM system second fluid circuit 134B, the electric machine system members 100B and 102B may continue to operate unaffected by the non-operational or derated fluid circuit 134A. In addition, it is contemplated the electric machine system members 100B and 102B may be operated to provide redundancy for the derated or turned-off electric machine system members 100A and 102A.

Each fluid circuit 134A, 134B, 134C of FIG. 3 includes a circuit path 138A, 138B, 138C (generally referred to as "138"). Each fluid circuit 134A, 134B, 134C also includes a heat exchanger 140A, 140B, 140C (generally referred to as "140"), a working fluid pump 142A, 142B, 142C (generally referred to as "142") and a working fluid reservoir 144A, 144B, 144C (generally referred to as "144"), where the circuit components 140, 142 and 144 in each fluid circuit 134 may be structurally and/or operationally independent from the like circuit components 140, 142 and 144 in the other fluid circuits 134. In each fluid circuit 134, the circuit components 140, 142 and 144 may be arranged inline along the respective circuit path 138. Each circuit path 138 of FIG. 3, for example, extends serially through the respective circuit components 140, 144 and 142 in a closed loop. Each circuit path 138 of FIG. 3 is also (a) fluidly coupled to and may extend in series or in parallel through and/or (b) may be otherwise arranged in thermal communication with the respective propulsion system components (e.g., 102 and 100, 136) serviced by the respective fluid circuit 134. Note, while each set of propulsion system components (e.g., 102 and 100, 136) is shown as being upstream of the heat exchanger 140 along the respective circuit path 138, it is contemplated one or more or all of these propulsion system components (e.g., 102 and 100, 136) may alternatively be downstream of the heat exchanger 140 along the respective circuit path 138. In addition or alternatively, while the fluid reservoir 144 is shown as being downstream of the respective heat exchanger 140 along the respective circuit path 138, it is contemplated the fluid reservoir 144 may alternatively be upstream of the heat exchanger 140 along the respective circuit path 138. Moreover, it is contemplated each fluid circuit 134 may (or may not) include various additional components (not shown) arranged along the circuit path 138 such as filter(s), sensor(s), additional heat exchanger(s), additional component(s), valve(s), pump(s), etc. The present disclosure therefore is not limited to the exemplary fluid circuit arrangements shown in FIG. 3.

Each heat exchanger 140A, 140B, 140C includes one or more internal intra-circuit heat exchanger (HX) working fluid passages 146A, 146B, 146C (generally referred to as "146") and one or more internal extra-circuit heat exchanger (HX) working fluid passages 148A, 148B, 148C (generally referred to as "148"). Each of these HX working fluid passages 146, 148 may be partially or completely formed by the respective heat exchanger 140. Each of the HX working fluid passages 146, 148 also extends within and/or through the respective heat exchanger 140. The intra-circuit HX working fluid passages 146 may form a section of or may otherwise be fluidly coupled inline with the respective circuit path 138. The extra-circuit HX working fluid passages 148 may form a section of or may otherwise be fluidly coupled inline with a path 150A, 150B, 150C (generally referred to as "150") of another (e.g., liquid and/or gas) working fluid circuit. The intra-circuit HX working fluid passages 146 are thereby fluidly discrete from the extra-circuit HX working fluid passages 148 within the respective heat exchanger 140. Within each heat exchanger 140, the intra-circuit HX working fluid passages 146 and the extra-circuit HX working fluid passages 148 may be arranged to configure that heat exchanger 140 as a crossflow heat exchanger, a counterflow heat exchanger, a parallel flow heat exchanger, or a hybrid heat exchanger with a combination crossflow, counterflow and/or parallel flow arrangement.

One, some or all of the heat exchangers 140 may each be configured as a liquid-to-air heat exchanger (e.g., a radiator). More particularly, the working fluid flowing through (e.g., circulated within) each fluid circuit 134 and its circuit path 138 may be a liquid working fluid. This liquid working fluid may function as a lubricant and/or a heat exchange fluid for one or more of the propulsion system components (e.g., 100, 102, 136) being serviced by the respective fluid circuit. The liquid working fluid, for example, may be or otherwise include a liquid lubricant (e.g., oil) and/or a liquid coolant (e.g., refrigerant). The liquid working fluid flowing through the engine fluid circuit 134C may alternatively be or otherwise include a liquid fuel and/or a hydraulic fluid. By contrast, a second working fluid flowing within the second circuit path 150 through the respective heat exchanger 140 may be a gas. This gas may be ambient air or compressed air bled from an engine flowpath (e.g., the bypass flowpath 74 of FIG. 1, the core flowpath 84 of FIG. 1, etc.) or another second working fluid source. The present disclosure, however, is not limited such an exemplary liquid-to-air heat exchanger arrangement. For example, the second working fluid flowing within the second circuit path 150 through the respective heat exchanger 140 may alternatively be a liquid such as, but not limited to, a liquid fuel, a hydraulic fluid, lubricant from another fluid circuit, coolant from another fluid circuit, etc.

Each pump 142 of FIG. 3 is configured to direct and/or regulate a flow of the respective working fluid through the respective circuit path 138 from an outlet from (e.g., a supply of) the respective fluid reservoir 144, through the respective set of propulsion system components (e.g., 102 and 100, 136) and the respective heat exchanger 140, to an inlet into (e.g., a return of) the respective fluid reservoir 144.

Each fluid reservoir 144 is configured to contain a quantity of the respective working fluid before, during and/or after fluid system operation. Each fluid reservoir 144, for example, may be configured as or otherwise include a tank, a cylinder, a pressure vessel, a bladder or any other type of (e.g., liquid) storage container. In some embodiments, one or more of the fluid reservoirs (e.g., 144A, 144B) may be un-vented. In other embodiments, at least one of the fluid reservoirs (e.g., 144C) may be vented.

During operation of each fluid circuit 134, the pump 142 directs (e.g., pumps) relatively cool working fluid out of the fluid reservoir 144, through the circuit path 138, into the propulsion system components (e.g., 100, 136) and/or into one or more heat exchangers (e.g., cooling plates 152A, 152B (generally referred to as "152")) in thermal communication with the propulsion system components (e.g., 102A, 102B). As the working fluid flows through the propulsion system components (e.g., 100, 136) and/or the heat exchanger (e.g., 152) in thermal communication therewith, heat energy generated by the propulsion system components (e.g., 100, 136, 102) may be transferred into the working fluid. The heat energy transfer may thereby dissipate the heat energy in (e.g., cool) the propulsion system components (e.g., 102 and 100, 136) while also heating the working fluid. The working fluid may also lubricate one or more internal components within the propulsion system components (e.g., 102 and 100, 136). The now heated working fluid is directed away from the propulsion system components (e.g., 102 and 100, 136), through the circuit path 138, to the heat exchanger 140. Within the heat exchanger 140, at least some or all of the heat energy previously transferred into the working fluid from the propulsion system components (e.g., 102 and 100, 136) may be transferred out of the working fluid into the second working fluid, thereby cooling the working fluid. The now cooled working fluid is directed from the heat exchanger 140, through the circuit path 138, back into the fluid reservoir 144 of subsequent recirculation.

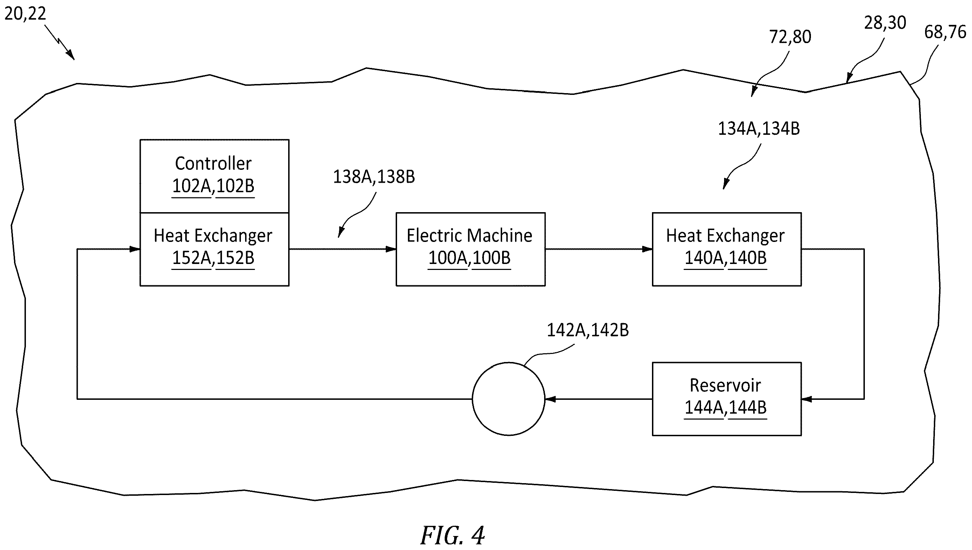

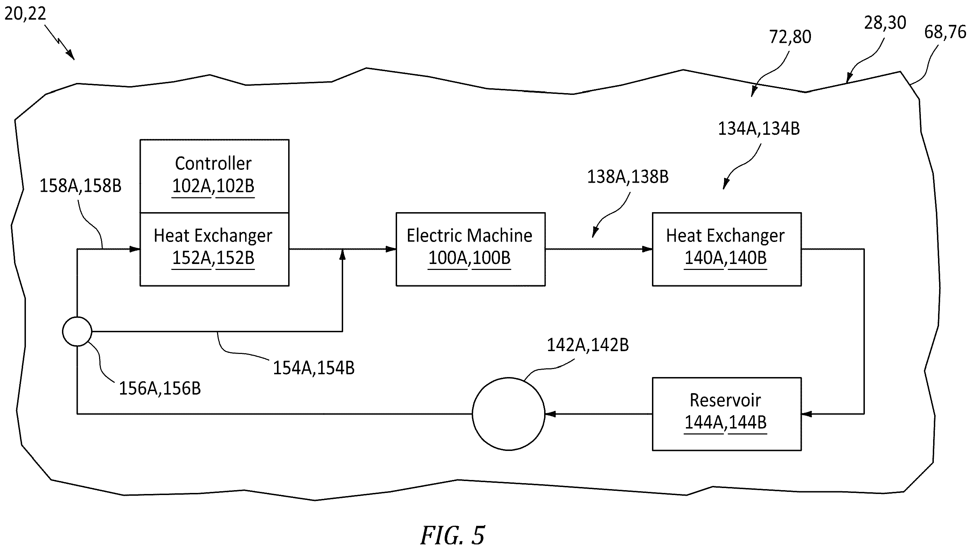

In some embodiments, referring to FIG. 4, the respective set of electric machine system members 102 and 100 may be arranged in series along the respective circuit path 138. The EM controller 102 of FIG. 4, for example, is arranged upstream of the electric machine 100 along the respective circuit path 138. The relatively temperature sensitive electronics of the EM controller 102 of FIG. 4 may thereby be cooled using lower temperature working fluid, whereas the relatively less temperature sensitive components of the electric machine 100 of FIG. 4 are cooled and/or lubricated using a higher temperature working fluid. The present disclosure, however, is not limited to such an exemplary serial flow arrangement. For example, referring to FIG. 5, each EM system fluid circuit 134A, 134B may also include a circuit bypass 154A, 154B (generally referred to as "154") and a circuit valve 156A, 156B (generally referred to as "156"). The circuit bypass 154A, 154B is configured to bypass a controller section 158A, 158B (generally referred to as "158") of the respective circuit path 138 in thermal communication with (e.g., extending through the cooling plate 152 for) the respective EM controller 102. The circuit valve 156 is arranged with the circuit bypass 154 to regulate a flow of the working fluid through the circuit bypass 154 and, thus, through the controller section 158. For example, during one mode of operation, the circuit valve 156 may close such that all of the working fluid flows through the controller section 158 before reaching the respective electric machine 100. During another mode of operation, the circuit valve 156 may open (e.g., and optionally close off the controller section 158) such that at least some (e.g., or all) of the working fluid flows through the circuit bypass 154 towards / to the respective electric machine 100, thereby bypassing the controller section 158 and the respective EM controller 102. During still another mode of operation, the circuit valve 156 may selectively open to (a) bias more of the working fluid flow into the controller section 158 than into the circuit bypass 154, or (b) bias more of the working fluid flow into the circuit bypass 154 than into the controller section 158.

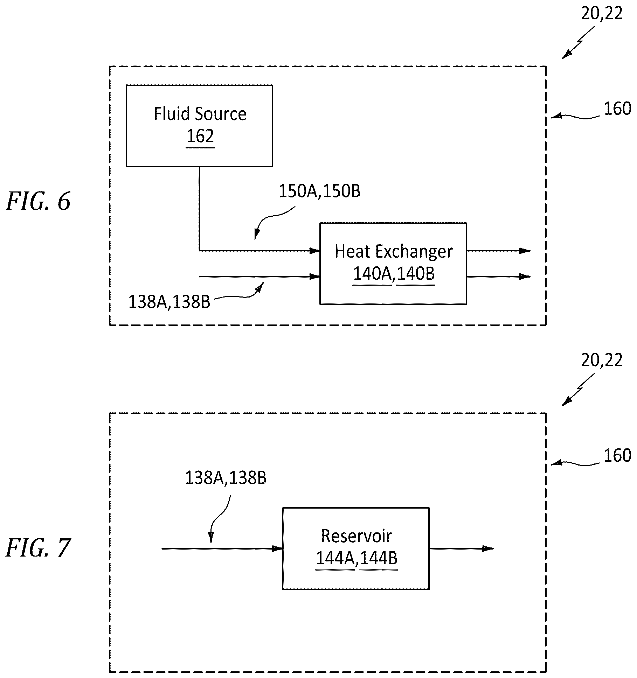

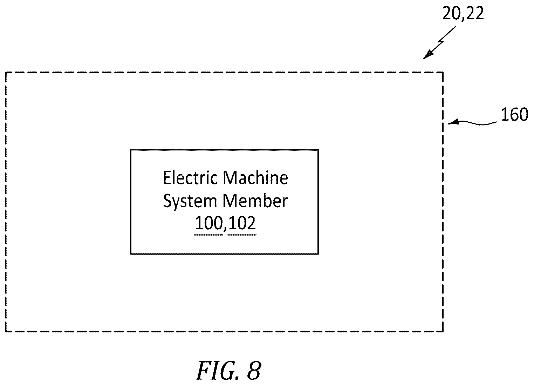

In some embodiments, referring to FIGS. 4 and 5, the members 140, 142 and 144 of a respective one of the EM system fluid circuits 134 may be arranged in relatively close proximity to and/or co-located with the electric machine system members 100 and 102 serviced by the respective EM system fluid circuit 134. For example, each EM system fluid circuit member 140, 142, 144 of FIGS. 4 and 5 as well as each serviced electric machine system member 100, 102 may be mounted and/or otherwise arranged with one of the housing structures 28, 30 and its respective engine case 68, 76; e.g., within a respective housing compartment 72, 80. With this arrangement, a length of the respective circuit path 138 may be reduced, fluid losses along the respective circuit path 138 may be reduced, routing complexity for the respective circuit path 138 may be simplified, and/or supports and/or mounts for the respective EM system fluid circuit 134 may be simplified. The present disclosure, however, is not limited to such an exemplary arrangement. One or more of the EM system fluid circuit members 140, 142 and/or 144, for example, may alternatively be arranged remote from the location of the respective electric machine 100 and/or the location of the respective electric machine 100. For example, referring to FIG. 6, the heat exchanger 140 may be remotely located with another structure (e.g., 160) of the aircraft propulsion system 22 (or another structure of the aircraft remote from the aircraft propulsion system 22) to facilitate packaging and/or to position the respective heat exchanger 140 closer to a source 162 of the second working fluid. In another example, referring to FIG. 7, the fluid reservoir 144 may be remotely located with another structure (e.g., 160) of the aircraft propulsion system 22 (or another structure of the aircraft remote from the aircraft propulsion system 22) to facilitate packaging and/or to position the fluid reservoir 144 in a cooler region away from, for example, the relatively hot engine core 50 (see FIG. 1). Moreover, referring to FIG. 8, one of the EM system fluid circuit members 100, 102 may be located remote (e.g., from the other EM system fluid circuit member 102, 100 of FIG. 4 or 5) with another structure (e.g., 160) of the aircraft propulsion system 22 (or another structure of the aircraft remote from the aircraft propulsion system 22). Examples of this other structure 160 of FIGS. 6-8 include, but are not limited to, the other one of the housing structures 30, 28 and its respective engine case 76, 68 of FIG. 1, a bifurcation 164 between the inner housing structure 28 and the outer housing structure 30 of FIG. 1, a pylon structure or another airframe component of the aircraft.

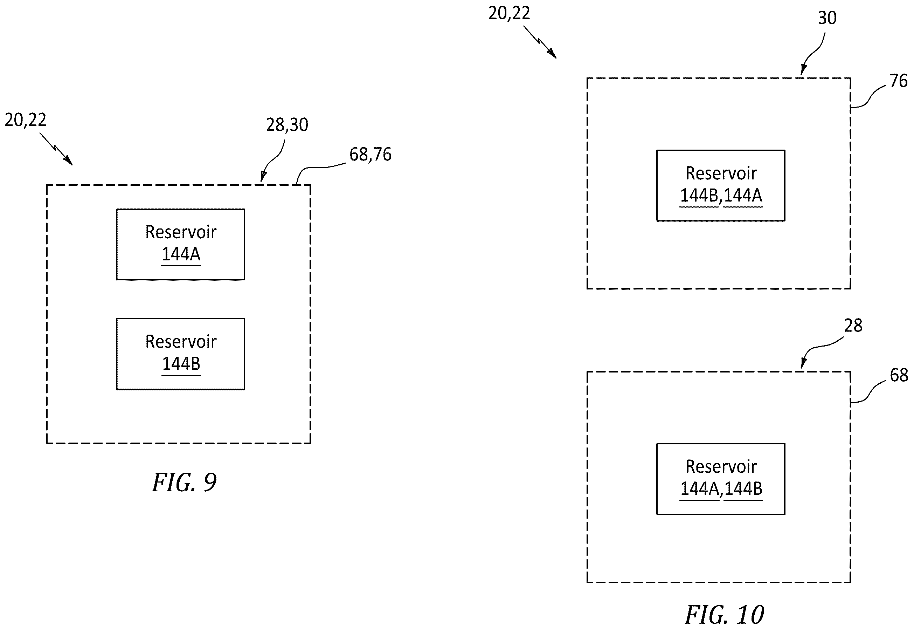

In some embodiments, one or more like sets of components (e.g., 140, 142, 144 of FIG. 3) of the EM system fluid circuits 134 may be arranged in relatively close proximity to and/or co-located with one another. For example, referring to FIG. 9, the fluid reservoirs 144A and 144B may be mounted and/or otherwise arranged with a common (the same) one of the housing structures 28, 30 and its respective engine case 68, 76. In other embodiments, however, one or more like sets of components (e.g., 140, 142, 144 of FIG. 3) of the EM system fluid circuits 134 may be arranged remote from one another. For example, referring to FIG. 10, one of the fluid reservoirs 144A, 144B may be mounted and/or otherwise arranged with the inner housing structure 28 and its inner case 68, while the other one of the fluid reservoirs 144B, 144A may be mounted and/or otherwise arranged with the outer housing structure 30 and its outer case 76.

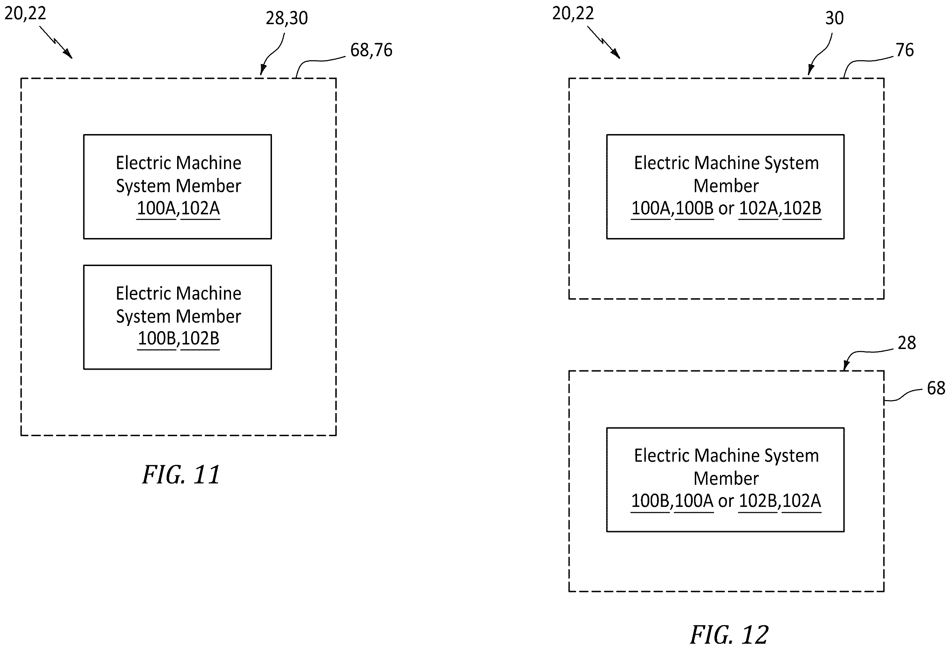

In some embodiments, one or more like sets of electric machine system members (e.g., 100A and 100B, 102A and 102B of FIG. 3) may be arranged in relatively close proximity to and/or co-located with one another. For example, referring to FIG. 11, the electric machine system members 100 or 102 may be mounted and/or otherwise arranged with a common (the same) one of the housing structures 28, 30 and its respective engine case 68, 76. In other embodiments, however, one or more like sets of electric machine system members (e.g., 100A and 100B, 102A and 102B of FIG. 3) may be arranged remote from one another. For example, referring to FIG. 12, one of the electric machine system members 100A, 100B (or 102A, 102B) is mounted and/or otherwise arranged with the inner housing structure 28 and its inner case 68, while the other one of the electric machine system members 100B, 100A (or 102B, 102A) is mounted and/or otherwise arranged with the outer housing structure 30 and its outer case 76.

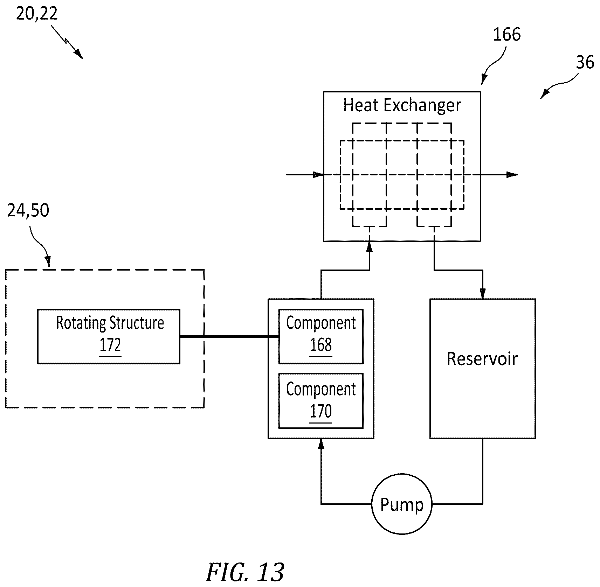

In some embodiments, referring to FIG. 3, the working fluid system 36 may include two of the EM system fluid circuits 134A and 134B. In other embodiments, referring to FIG. 13, the working fluid system 36 may also include an electric machine (EM) system third fluid circuit 166 in addition to or as an alternative to the engine fluid circuit 134C of FIG. 3. This EM system third fluid circuit 166 may have a similar configuration as described above with respect to the other EM system fluid circuits 134A and 134B. For example, the EM system third fluid circuit 166 may be configured to service (e.g., lubricate and/or cool) a third electric machine 168 and/or a third electric machine (EM) controller 170 for the third electric machine 168. Like the other electric machines 100A and 100B, the third electric machine 168 may be operatively coupled to the turbine engine 24 and its engine core 50. For example, where the turbine engine 24 is configured with an intermediate speed rotating structure 172, the third electric machine 168 may be operatively coupled to that intermediate speed rotating structure 172 in a similar manner as described above with respect to the electric machines 100A and 100B and the engine rotating structures 60A and 60B (see FIG. 2). Alternatively, the third electric machine 168 may be operatively coupled to another component or system; e.g., an engine accessory, one of the engine rotating structures 60 of FIG. 1, etc.

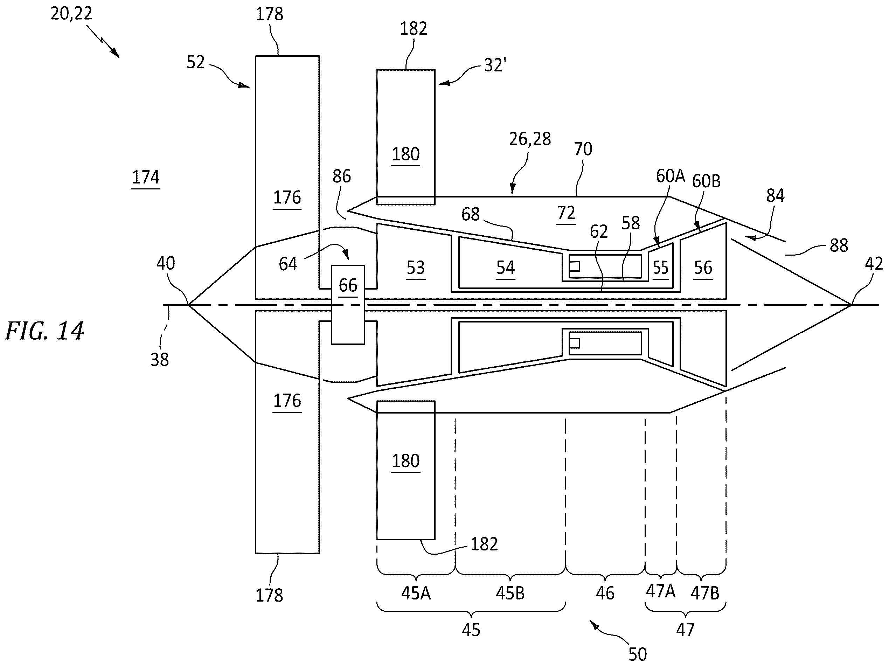

The aircraft propulsion system 22 of FIG. 1 is described above as a ducted propulsor propulsion system; e.g., the turbofan propulsion system. However, as described above, the present disclosure is not limited to such an exemplary aircraft propulsion system. For example, referring to FIG. 14, the outer housing structure 30 (see FIG. 1) may be omitted from the propulsion system housing 26 to open the propulsor rotor 52 up to an environment 174 external to the aircraft propulsion system 22 and, more generally, external to the aircraft. More particularly, the propulsor rotor 52 of FIG. 14 includes a plurality of open propulsor blades 176 arranged circumferentially about the propulsion system axis 38 in an array (e.g., a circular array), which array of propulsor blades may be unshrouded or alternatively shrouded by a tubular propulsor rotor shroud dedicated to the propulsor rotor 52 for example. Each of these propulsor blades 176 projects radially out from a base of the propulsor rotor 52, into the external environment 174, to a distal tip 178 of the respective propulsor blade 176. Each propulsor blade 176 is thereby configured as an un-ducted propulsor blade which is exposed to (e.g., disposed in) the surrounding external environment 174. With this arrangement, the propulsor rotor 52 is an open propulsor rotor (e.g., an un-ducted propulsor rotor) and the aircraft propulsion system 22 is configured as an open rotor propulsion system.

The aircraft propulsion system 22 of FIG. 14 is configured with an open guide vane structure 32'. This guide vane structure 32' of FIG. 14 includes a plurality of open exit guide vanes 180; e.g., airfoils. The guide vanes 180 are arranged and may (or may not) be equispaced circumferentially about the propulsion system axis 38 in an array (e.g., a circular array), which array of guide vanes may be unshrouded or alternatively shrouded by a tubular guide vane shroud dedicated to the guide vane structure 32' for example. This guide vane structure 32' and its guide vanes 180 are arranged axially next to (e.g., adjacent) the propulsor rotor 52 and its propulsor blades 176. The guide vane structure 32' and its guide vanes 180 of FIG. 14, for example, are arranged downstream of the propulsor rotor 52 and its propulsor blades 176, without (e.g., any) other elements axially therebetween to obstruct, turn and/or otherwise influence the air propelled by the propulsor rotor 52 to the guide vane structure 32' for example. Each of the guide vanes 180 projects radially out from an exterior surface of the inner housing structure 28, into the external environment 174, to a distal tip 182 of the respective guide vane 180. Each guide vane 180 is thereby configured as an un-ducted guide vane which is exposed to (e.g., disposed in) the surrounding external environment 174. With the foregoing arrangement, the guide vane structure 32' and its guide vanes 180 are configured to condition (e.g., straighten out, de-swirl, etc.) an outer stream of air propelled by the propulsor rotor 52 within the external environment 174 that bypass the engine core 50. Of course, in other embodiments, the guide vane structure 32' may be omitted where, for example, the aircraft propulsion system 22 is alternatively configured as a counter-rotating open rotor (CROR) aircraft propulsion system, etc.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
a turbine engine (24) including a first rotating structure (60A) and a second rotating structure (60B) operable to rotate independent of the first rotating structure, the first rotating structure comprising a first bladed rotor, and the second rotating structure comprising a second bladed rotor;
a first electric machine (100A) operatively coupled to the first rotating structure;
a first controller (102A) configured to control operation of the first electric machine;
a first fluid circuit (134A) configured to circulate a first liquid and service the first electric machine and the first controller;
a second electric machine (100B) operatively coupled to the second rotating structure;
a second controller (102B) configured to control operation of the second electric machine; and
a second fluid circuit (134B) configured to circulate a second liquid and service the second electric machine and the second controller, the second fluid circuit fluidly discrete from the first fluid circuit.

2. The apparatus of claim 1, further comprising:
a third electric machine (168);
a third controller (170) configured to control operation of the third electric machine; and
a third fluid circuit (166) configured to circulate a third liquid and service the third electric machine and the third controller, the third fluid circuit fluidly discrete from the first fluid circuit and the second fluid circuit.

3. The apparatus of claim 1 or 2, further comprising an engine fluid circuit (134C) configured to circulate a third liquid and service one or more components (136) of the turbine engine, the engine fluid circuit fluidly discrete from the first fluid circuit and the second fluid circuit.

4. The apparatus of claim 1, 2 or 3, wherein at least one of:
the first fluid circuit is configured to cool the first electric machine and the first controller using the first liquid; and/or
the second fluid circuit is configured to cool the second electric machine and the second controller using the second liquid.

5. The apparatus of any preceding claim, wherein at least one of:
the first fluid circuit is configured to lubricate the first electric machine using the first liquid; and/or
the second fluid circuit is configured to lubricate the second electric machine using the second liquid.

6. The apparatus of any preceding claim, further comprising:
an electrical system (98);
the first electric machine electrically coupled to the electrical system through the first controller; and
the second electric machine electrically coupled to the electrical system through the second controller.

7. The apparatus of any preceding claim, wherein the first fluid circuit includes:
a first circuit heat exchanger (140A);
a first circuit reservoir (144A);
a first circuit pump (142A); and
a first circuit path (138A);
the first circuit heat exchanger, the first circuit reservoir and the first circuit pump fluidly coupled inline along the first circuit path.

8. The apparatus of claim 7, wherein:
the first controller and the first electric machine are arranged serially along the first circuit path; and/or
the first controller is arranged upstream of the first electric machine along the first circuit path.

9. The apparatus of claim 7 or 8, wherein:
the first electric machine and the first controller are arranged along the first circuit path;
the first fluid circuit further includes a first circuit bypass (154A) and a first circuit valve (156A);
the first circuit bypass is configured to bypass the first controller along the first circuit path; and
the first circuit valve is configured to regulate a flow of the first liquid through the first circuit bypass.

10. The apparatus of claim 7, 8 or 9, wherein:
the first electric machine and the first controller are arranged along the first circuit path;
the first fluid circuit further includes a first circuit bypass (154A) configured to bypass a controller section of the first circuit path in thermal communication with the first controller;
during a first mode, the first fluid circuit is configured to flow more of the first liquid through the controller section of the first circuit path than through the first circuit bypass; and
during a second mode, the first fluid circuit is configured to flow more of the first liquid through the first circuit bypass than through the controller section of the first circuit path.

11. The apparatus of any of claims 7 to 10, wherein:
the turbine engine further includes an engine case (76);
the first electric machine, the first controller and the first circuit reservoir are arranged with the engine case,
wherein, optionally:
the engine case houses the first bladed rotor and the second bladed rotor; and/or
the turbine engine further includes a propulsor rotor (52), and the engine case houses the propulsor rotor.

12. The apparatus of any of claims 7 to 11, wherein:
the turbine engine further includes an engine case (76);
the first circuit reservoir and one of the first electric machine or the first controller are arranged with the engine case; and
the other one of the first electric machine or the first controller is arranged remote from the engine case.

13. The apparatus of any preceding claim, wherein the turbine engine further includes:
a compressor section (45);
a combustor section (46);
a turbine section (47); and
a flowpath (84) extending through the compressor section, the combustor section and the turbine section;
the first bladed rotor comprising a first turbine rotor in the turbine section, the second bladed rotor comprising a second turbine rotor in the turbine section, and the first turbine rotor arranged between the combustor section and the second turbine rotor along the flowpath.

14. An apparatus for an aircraft, comprising:
a turbine engine (24) including a first rotating structure (60A) and a second rotating structure (60B) operable to rotate independent of the first rotating structure, the first rotating structure comprising a first bladed rotor, and the second rotating structure comprising a second bladed rotor;
a first electric machine (100A) operatively coupled to the first rotating structure;
a first controller (102A) electrically coupled to the first electric machine;
a first fluid circuit (134A) configured to service the first electric machine and the first controller, the first fluid circuit comprising a first circuit pump (142A);
a second electric machine (102A) operatively coupled to the second rotating structure;
a second controller (102B) electrically coupled to the second electric machine; and
a second fluid circuit (134B) configured to service the second electric machine and the second controller, the second fluid circuit comprising a second circuit pump (142B) configured to operate independent of the first circuit pump,
wherein, optionally:
the second circuit pump is located remote from the first circuit pump; and/or
the first circuit pump is configured to pump a first liquid through a first circuit path of the first fluid circuit, and the second circuit pump is configured to pump a second liquid through a second circuit path of the second fluid circuit, and the second liquid is different than the first liquid.

15. An apparatus for an aircraft, comprising:
an aircraft propulsion system (22) including a plurality of electric machines (100), a plurality of controllers (102) and a plurality of fluid circuits (134);
each of the plurality of controllers electrically coupled to and configured to control operation of a respective one of the plurality of electric machines; and
each of the plurality of fluid circuits configured to circulate a respective liquid, each of the plurality of fluid circuits configured to cool and/or lubricate a respective one of the plurality of electric machines and a respective one of the plurality of controllers, and each of the plurality of fluid circuits fluidly independent of each other fluid circuit of the plurality of fluid circuits.
